# EUROPÄISCHE PATENTSCHRIFT

(11) **EP 1 312 545 B1**
(45) Veröffentlichungstag und Bekanntmachung des Hinweises auf die Patenterteilung: **30.08.2006**
(21) Anmeldenummer: 02024866.2
(22) Anmeldetag: 08.11.2002
(51) Int. Cl.: B64C 9/18, B64C 9/02

(54) **Aerodynamisches Profil mit verstellbarer Klappe**
Airfoil with adjustable flap
Profil aérodynamique avec volet actionnable

(30) Priorität: 19.11.2001 DE 10156733
(43) Veröffentlichungstag der Anmeldung: 21.05.2003
(73) Patentinhaber: EADS Deutschland GmbH, 85521 Ottobrunn (DE); Airbus Deutschland GmbH, 21129 Hamburg (DE)
(72) Erfinder: Gessler, Andreas, 85540 Haar (DE); Hansen, Heinz, 28844 Weyhe (DE); Havar, Tamas, 70563 Stuttgart (DE); Horoschenkoff, Alexander, Prof. Dr., 82024 Taufkirchen (DE)

(56) Entgegenhaltungen:
- WO-A-00/63071
- DE-C- 664 509
- US-A- 5 884 872

## Beschreibung

Die vorliegende Erfindung betrifft ein aerodynamisches Profil mit verstellbarer Klappe, das gemäß dem Oberbegriff des Anspruches 1 einen vorderen Profilbereich sowie einen in der Abströmung liegenden hinteren Profilbereich aufweist und durch eine druckseitige sowie eine saugseitige Deckhaut begrenzt ist, wobei die druckseitige und die saugseitige Deckhaut im hinteren Profilbereich in einer Profilhinterkante zusammenlaufen.

Derartige aerodynamische bzw. auftriebskrafterzeugende Profile sind typischerweise Tragflächen und Rotorblätter, an deren Hinterkanten Lande- bzw. Steuerklappen angeordnet sind. Durch eine Auf- und Abbewegung der Klappe wird auf bekannte Weise ein aerodynamischer Steuereffekt bewirkt. Dies ist insbesondere aufgrund der unterschiedlichen aerodynamischen Anforderungen beim Starten und Landen erforderlich, so dass sich entsprechende Klappenstellungen im Verlauf der unterschiedlichen Flugphasen realisieren lassen müssen.

Eine derartige konventionelle Tragflügelstruktur mit Klappe ist beispielsweise in der Druckschrift DE 41 07 556 beschrieben, bei der an der Tragflügelhinterkante eine Landeklappe angeordnet ist. Die Landeklappe ist drehbar an einem auf einer Führungsschiene beweglich angeordneten Wagen angelenkt und somit verschiebbar, während ein angelenkter Hebel den Winkel der Landeklappe in der Ausfahrbewegung verändert. In der Start - bzw. Landephase wird durch das Ausfahren nach hinten die Flügelfäche vergrößert und durch die Winkeländerung die Profilkontur verändert.

Im Hinblick auf zukünftige Anwendungen ist es jedoch problematisch, dass mit den bisher bekannten Steuerklappen die erwarteten steigenden Anforderungen an Verkehrsflugzeuge durch die Zunahme des Luftverkehrs nicht oder nicht effektiv genug gelöst werden können. Eine dieser Anforderungen ist beispielsweise die Notwendigkeit der Steigerung der Steig- und Sinkraten zur Lärmreduktion in der Anflugszone und zur Steigerung der Start- und Landefrequenz. Ferner sind Verbesserungen der Anpassungsfähigkeit für ein optimales Cₐ/C_{w}-Verhältnis zur Verbrauchsreduzierung in Zukunft erforderlich, da aufgrund des hohen Verkehrsaufkommens eine Anpassung über die Reiseflughöhe nur noch bedingt möglich ist. Daneben müssen vermehrt Lastumverteilungen zur Gewichtsund Verbrauchsreduktion berücksichtigt werden.

Um diesen neuen Anforderungen zu begegnen sind in jüngster Zeit neuartige kleine Steuerklappen - sogenannte Miniklappen - untersucht worden. Derartige Miniklappen unterscheiden sich von herkömmlichen Klappen mit Tiefen von 10 - 30% Cleanflügeltiefe dadurch, dass sie nur eine sehr geringe Tiefe von 1 - 3% aufweisen und wie bei einer Spreizklappe aus einem feststehenden und einem ausgeschlagenen Teil bestehen. Eine derartige Miniklappe ist die sogenannte Gurney-Klappe, die aus dem Bereich der Aerodynamik bekannt ist und z.B. in "Computational Evaluation of an Airfoil with a Gurney Flap", C.S. Jang, J. C. Ross, R. M. Cummings, AIAA-92-2708-CP beschrieben ist. Die Gurney-Klappe ist am Ende eines aerodynamischen Profils als starre Aufdickung fest an dessen druckseitiger Deckhaut angeordnet. Die Klappe schließt dabei mit der druckseitigen Deckhaut einen festen Winkel ein, der typischerweise maximal 90° beträgt. Im Nachlauf der Klappe bildet sich ein Wirbelsystem aus, was zu einer Verbesserung der Oberseitenströmung führt und eine starke Strömungsumlenkung an der Hinterkante des Profils bewirkt, was wiederum den Auftrieb des aerodynamischen Profils deutlich verbessert. Eine luftdichte Ausbildung des Übergangsbereiches zwischen druckseitiger Deckhaut und Klappe kann dabei die auftriebssteigernde Wirkung der Miniklappe verbessern. Die erforderliche Spaltdichte am Übergangsbereich konnte bisher technisch nur dadurch gewährleistet werden, dass die Klappe starr mit der Profilunterseite verbunden ist. Somit weist die bekannte Gurney-Klappe den Nachteil auf, dass ihre aerodynamische Wirkung nicht variierbar ist.

Ein Profil mit einer solchen Klappe ist aus WO-00/63071 bekannt, die alle Merkmale des Oberbegriffs des unabhängiges Anspruchs 1 offenbart.

Der Erfindung liegt somit die Aufgabe zugrunde, ein auf dem bekannten Funktionsprinzip basierendes aerodynamisches Profil dahingehend weiter zu entwickeln, dass die an dem Profil angebrachte Klappe verstellbar ausgebildet ist, so dass deren aerodynamische Wirkung einstellbar ist. Ferner liegt der Erfindung die Aufgabe zugrunde, das aerodynamische Profil mit verstellbarer Klappe wartungsfreundlich auszubilden, wobei es einen einfachen Aufbau aufweist und kostengünstig herstellbar ist.

Die Aufgabe wird durch ein gattungsgemäßes aerodynamisches Profil gelöst, das sich erfindungsgemäß dadurch auszeichnet, dass im hinteren Profilbereich an der Unterseite der druckseitigen Deckhaut eine Klappe derart schwenkbar gelagert ist, dass die Klappe im Ruhezustand in Strömungsrichtung weisend an der Kontur der druckseitigen Deckhaut anliegt und im ausgelenkten Zustand einen Winkel mit der druckseitigen Deckhaut einschließt, wobei zur lufdichten Anlenkung der Klappe in der Klappe eine luftdichte Gelenkverbindung in Form eines Schlaufenbereiches, welcher durch Falten des Klappenmaterials gebildet ist, integriert ist, um dass im Windschatten der ausgelenkten Klappe sich ein die Strömungsverhältnisse verbesserndes Wirbelsystem ausbildet.

Diese Anordnung hat den Vorteil, dass eine luftdichte Klappenanlenkung auch beim Verstellen der Klappe gewährleistet ist, so dass die aerodynamische Wirkung der Klappe einstellbar ist. Dadurch ist die Anpassbarkeit an die oben genannten steigenden Anforderungen an heutige Luftverkehrsflugzeuge gewährleistet.

Vorzugsweise ist in der druckseitigen Deckhaut im Übergangsbereich zur Klappe eine Einwölbung ausgebildet, die an die Form der Gelenkverbindung sowie der Klappe angepasst ist. Dabei entspricht der Radius der Einwölbung der Krümmung der Gelenkverbindung. Dadurch wird einerseits der Luftwiderstand der Klappe im Ruhezustand reduziert. Andererseits wirkt sich diese Einwölbung aufgrund des Anliegens an der Gelenkverbindung vorteilhaft auf die Spaltdichtigkeit des Übergangsbereiches aus.

Besonders bevorzugt besteht die Klappe aus einem Faserverbundwerkstoff. Dadurch wird auf einfache Weise die Integration der Gelenkverbindung in die Klappe ermöglicht. Zudem weist eine deratige Klappe eine ausreichende Festigkeit auf, so dass sie sich über einen weiten Bereich in Spannweitenrichtung erstreckt. Gleichzeitig wird eine Gewichtsreduzierung erzielt, was insbesondere im Hinblick auf den Kraftstoffverbrauch von Vorteil ist. Ein weiterer Vorteil liegt darin, dass die Bauhöhe der Klappe bzw. der Gelenkverbindung aufgrund der geringen Materialdicke des Faserverbundwerkstoffes sehr klein ist, so dass im Ruhezustand kaum zusätzlicher Luftwiderstand erzeugt wird.

Gemäß einer ersten Ausführungsform der Erfindung besteht die Klappe aus einem laminierten, zusammengefalteten Prepreg-Material, wobei entlang der Faltung ein luftdichter Schlaufenbereich ausgebildet ist, in den ein Gleitwerkstoff eingebracht und ein Drehstab einführbar ist. Aufgrund der gefalteten Anordnung wird eine luftdichte Klappenanlenkung entlang der gesamten Klappenausdehnung in Spannweitenrichtung zuverlässig gewährleistet. Zudem ist durch die Flexibilität des Materials ein Anschmiegen an die in der druckseitigen Deckhaut vorgesehene Einwölbung sehr gut möglich, was die Luftdichtigkeit der Klappenanlenkung zudem verbessert.

Gemäß einer weiteren Ausführungsform besteht die Klappe aus unidirektional und multidirektional verstärkten Faserverbund-Gelegen, die miteinander vernäht, imprägniert und ausgehärtet sind, so dass im Bereich des unidirektionalen Faserverbund-Geleges ein verstärkter, luftdichter Schlaufenbereich entsteht, in den zur drehbaren Lagerung der Klappe ein Gleitwerkstoff eingebracht und ein Drehstab einführbar ist. Ebenso wie bei der ersten Ausführungsform zeichnet sich die Klappe aus vernähtem Faserverbund-Gelege dadurch vorteilhaft aus, dass eine wirksame, luftichte Klappenanlenkung mit entsprechender Formanpassbarkeit an die druckseitige Deckhaut möglich ist. Ferner hat diese Ausgestaltung gegenüber der Anordnung aus Prepreg-Material den Vorteil, dass der Schlaufenbereich durch das unidirektionale Faserverbund-Gelege vorzugsweise in Dickenrichtung verstärkt ist. Neben der Verstärkung wird unter anderem eine Delamination der Klappe in der Symmetrieebene ausgehend vom Schlaufenbereich verhindert.

Zeckmäßigerweise weist der Schlaufenbereich ausgefräste Bereiche auf, so dass die Klappe eine Vielzahl von einzelnen Schlaufen aufweist, in die der Drehstab einführbar ist. Dies schafft auf einfache Weise Raum, um ein entsprechendes Gegenstück der Gelenkverbindung an dem Drehstab anzubringen, ohne dass die Spaltdichtigkeit der Klappenanlenkung beeinträchtigt wird.

Vorzugsweise ist an dem Drehstab ferner ein entsprechendes Gegenstück angeordnet, wobei das Gegenstück aus Faserverbundwerkstoff, Aluminium oder einem anderen blechförmigen, metallischem Material besteht und Befestigungsschlaufen aufweist, und wobei der Drehstab mit den Befestigungsschlaufen drehfest verbunden ist und in den Schlaufen der Klappe drehbar gelagert ist, oder umgekehrt. Vorteilhaft ist hier die Möglichkeit unterschiedliche Materialien verwenden zu können.

Ferner sind vorteilhafterweise in der druckseitigen Deckhaut Aussparungen vorgesehen. Mit Hilfe dieser Aussparungen wird die Befestigung der Klappe an der druckseitigen Deckhaut wesentlich erleichtert. Dabei ist es zweckmäßig, entsprechende Befestigungsbereiche der Befestigungselemente in die Aussparungen einzuführen und mittels Kleben und / oder Nieten an der druckseitigen Deckhaut anzubringen.

Vorteilhafterweise sind zwischen saugseitiger und druckseitiger Deckhaut Verbindungselemente angeordnet, wobei die Verbindungselemente rippenförmig ausgebildet und in Strömungsrichtung verlaufend angeordnet sind. Dadurch ergibt sich ein monolithischer Aufbau, der im Hinblick auf Gewichtseinsparungen von Vorteil ist.

Zweckmäßigerweise ist zwischen den beabstandeten Deckhäuten ein Anschlussprofil angeordnet, über das der hintere Profilbereich an dem vorderen Profilbereich anbringbar ist. Auf diese Weise kann im Falle einer Beschädigung der Klappe oder eines anderen Bauteils der hintere Pofilbereich leicht ausgewechselt werden. Dies kann beispielsweise durch Lösen einer Bolzenverbindung zwischen Anschlussprofil und hinterem Profilbereichen realisiert werden. Hierbei ist zu beachten, dass die Abmessungen des vordern und des hinteren Profilbereiches entsprechend angepasst sind, um eine konstante Strömungsoberfläche zu erhalten.

Es ist zudem von Vorteil, dass an der Unterseite der Klappe ein Befestigungsteil vorgesehen ist, an dem der Stellhebels über eine Gelenkstelle angelenkt ist.

Vorteilhafterweise ist der Aktuator im vorderen Profilbereich angeordnet. Dadurch kann eine Auswechslung des hinteren Profilbereiches ungehindert durchgeführt werden, so dass geringe Wartungszeiten erforderlich sind.

Es ist zweckmäßig, die saugseitige Deckhaut, die druckseitige Deckhaut, die Verbindungselemente sowie das Anschlussprofil aus Aluminium herzustellen. Dies gewährleistet einen ausreichenden Blitzschutz.

Im Folgenden wird die Erfindung anhand der beigefügten Abbildungen in näheren Einzelheiten erläutert. In denen zeigt:
- Fig. 1: eine schematische dreidimensionale Ansicht eines gattungsgemäßen aerodynamischen Profils;
- Fig. 2: eine Schnittansicht des hinteren Profilbereiches des erfindungsgemäßen aerodynamischen Profils;
- Fig. 3: einen Prinzipaufbau einer Klappe aus Faserverbundwerkstoff mit integrierter Gelenkverbindung;
- Fig. 4: eine alternative Ausführungsform der Gelenkverbindung gemäß Fig. 3;
- Fig. 5: eine schematische dreidimensionale Ansicht des in Fig. 2 dargestellten hinteren Profilbereiches; und
- Fig. 6: ein herkömmliches Gelenklager zur Anbringung der Klappe an der druckseitigen Deckhaut.

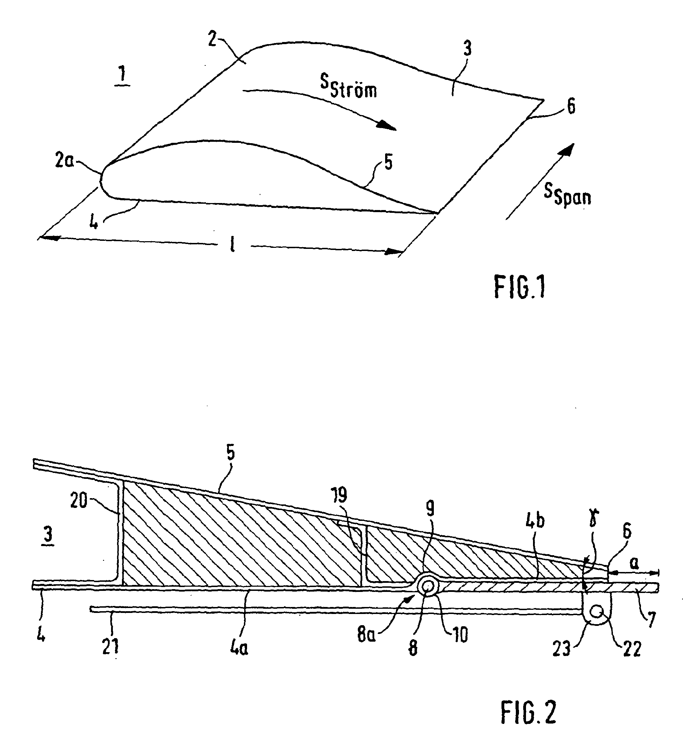

Fig. 1 zeigt in allgemeiner Form ein aerodynamisches Profil in schematischer, dreidimensionaler Darstellung. Das Profil 1 weist einen vorderen Profilbereich 2 sowie einen in der Abströmung liegenden hinteren Profilbereich 3 auf. Zur Verdeutlichung ist in Fig. 1 die Strömungsrichtung mit Pfeil S_{ström} bezeichnet. Das Profil 1 wird auf bekannte Weise durch eine druckseitige Deckhaut 4 sowie eine saugseitige Deckhaut 5 begrenzt, die im hinteren Profilbereich 3 in einer Profilhinterkante 6 zusammenlaufen. Die Profilhinterkante 6 verläuft dabei in Spannweitenrichtung Sₛₚₐₙₙ. Als Profiltiefe 1 wird ferner die Erstreckung von Profilnase 2a bis zur Hinterkante 6 bezeichnet. Ein derartiges aerodynamisches Profil ist zum Beispiel ein Hubschrauberrotorblatt oder eine Flugzeugtragfläche, die aus dem Stand der Technik wohl bekannt ist, so dass auf eine Beschreibung weiterer Einzelheiten verzichtet werden kann. Darüber hinaus kann das aerodynamische Profil aber auch eine an einem Rotorblatt oder an Trag-, Höhen- und Seitenleitwerksflächen angebrachte Lande- oder Steuerklappe sein.

In Fig. 2 ist der hintere Profilbereich 3 des aerodynamischen Profils 1 aus Gründen der besseren Übersichtlichkeit als Schnittansicht vergrößert und im Detail dargestellt. Im Folgenden wird dieser Teil des aerodynamischen Profils auch als Hinterkantenstruktur bezeichnet. In Fig. 2 sind entsprechende Bauteile mit den gleichen Bezugszeichen wie in Fig. 1 bezeichnet. Das Zusammenlaufen der druckseitigen und der saugseitigen Deckhaut 4, 5 in der Hinterkante 6 erfolgt in der Ausführungsform gemäß Fig. 2 derart, dass die saugseitige Deckhaut 5 unter einem spitzen Winkel γ bezüglich der druckseitigen Deckhaut 4 angeordnet ist. Ferner ist an der Unterseite der druckseitigen Deckhaut 4 eine Klappe 7 schwenkbar angeordnet. Die Schwenkachse 8 verläuft parallel zur Hinterkante 6 und somit senkrecht zu der in Fig. 2 dargestellten Zeichenebene. In dem in Fig. 2 dargestellten Ruhezustand, der auch als "eingefahrener Zustand" bezeichnet wird, liegt die Klappe 7 in Strömungsrichtung weisend an der druckseitigen Deckhaut 4 an, so dass durch die Klappe 7 nahezu kein zusätzlicher Luftwiderstand entsteht. Dabei ragt die Klappe um den Abschnitt a über die Hinterkante 6. Dieser Überstand beträgt typischerweise ca. 0,5 % der Profiltiefe 1, kann aber auch auf 0% Profiltiefe zurückgehen.
Um etwaige Einflüsse der eingefahrenen Klappe 7 auf den Luftwiderstand weiter zu vermindern, ist die druckseitige Deckhaut 4 im Bereich der Klappenanlenkung, d.h. im Übergangsbereich 8a von druckseitiger Deckhaut 4 zur Klappe 7, an die Form der Klappe 7 bzw. deren gelenkartige Verbindung 10 angepasst. Zu diesem Zweck weist die druckseitige Deckhaut 4 zur Aufnahme der Klappe 7 eine in Richtung Profilinneres weisende Einwölbung 9 auf, wobei der vor der Einwölbung 9 liegende Abschnitt 4a der druckseitigen Deckhaut und der - in Strömungsrichtung betrachtet - nach der Einwölbung 9 liegende Abschnitt 4b annähernd parallel zueinander verlaufen. Dabei ist der sich an die Einwölbung 9 in Richtung Hinterkante 6 anschließende Abschnitt 4b, bezogen auf den vor der Einwölbung 9 liegenden Abschnitt 4a, in Richtung Profilinneres versetzt. Auf diese Weise wird ein effektiver Einbau der Klappe bewirkt, so dass sich diese im Ruhezustand an den hinteren Abschnitt 4b der druckseitigen Deckhaut anschmiegt.

Im ausgelenkten Zustand der Klappe (nicht dargestellt) schließt die Klappe 7 einen Winkel mit der druckseitigen Deckhaut 4 von maximal 90° ein. Die Verstellung der Klappe 7 erfolgt dabei durch einen Stellhebel 21, der im wesentlichen parallel zur druckseitigen Deckhaut 4 verläuft und über eine Gelenkstelle 22 an einem Befestigungsteil 23 der Klappe 7 beweglich angeordnet ist. Die Betätigung des Stellhebels 21 erfolgt über einen Aktuator (nicht dargestellt). Die Stellfrequenz des Aktuators beträgt zur Auslenkung der Klappe typischerweise einige Hz. Bevorzugt wird eine Frequenz von <1 Hz gewählt.

Wie eingangs bereits erwähnt, ist für die Erzeugung eines auftriebsverbessernden Wirbelsystems im Windschatten der Klappe eine hohe Spaltdichtigkeit erforderlich. Dies wird durch ein Integrieren einer Gelenkverbindung 10 in die Klappe 7 realisiert, was im Folgenden in näheren Einzelheiten diskutiert wird.

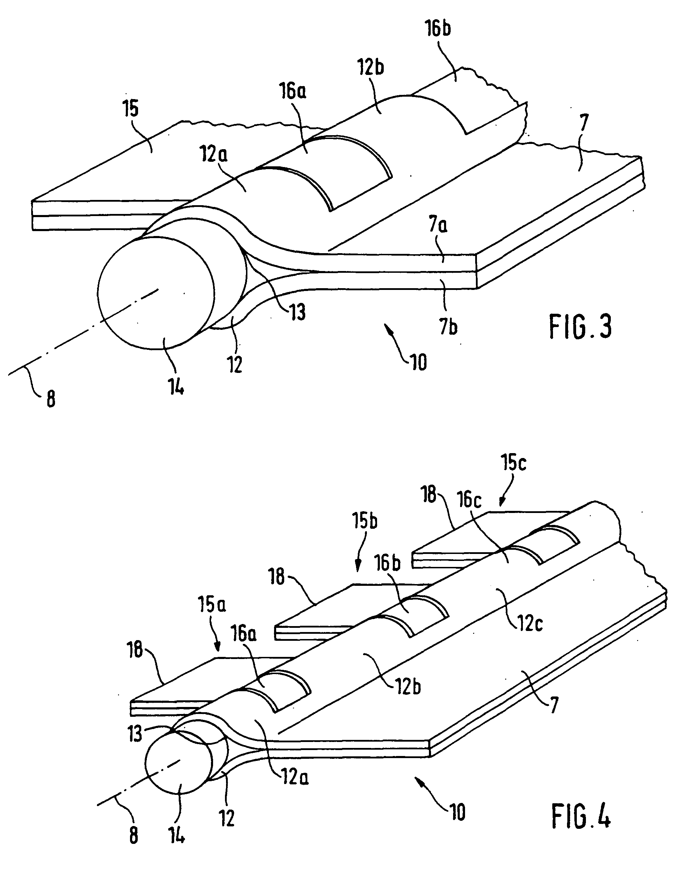

Gemäß einer ersten Ausführungsform besteht die Klappe 7 aus einem sogenannten Prepreg-Material. Der Begriff "Prepreg" bezeichnet bekanntlicherweise vorimprägniertes Fasergelege. Die Klappe 7 weist eine Vielzahl von Prepreg-Streifen auf, die zur Bildung eines Schlaufenbereiches 12 bis zur Symmetrieebene der Klappe 7 laminiert und anschließend zusammengefaltet sind (Fig. 3). Somit setzt sich die Dicke der Klappe 7 aus der Summe der jeweilige Dicken der symmetrischen Teillagen zusammen, die in Fig. 3 mit Bezugsziffern 7a bzw. 7b bezeichnet sind. Aufgrund der Faltung entlang der Symmetrieebene entsteht der Schlaufenbereich 12, der die Funktion der Klappenlagerung übernimmt. Ferner ist im Schlaufenbereich 12 ein Gleitwerkstoff 13 (z.B. ein PTFE-Liner) angeordnet, so dass der in den Schlaufenbereich 12 eingeführte Drehstab 14 möglichst reibungsfrei gelagert ist und somit Verschleißeigenschaften reduziert. In Fig. 3 befindet sich der Gleitwerkstoff 13 auf dem Drehstab 14.

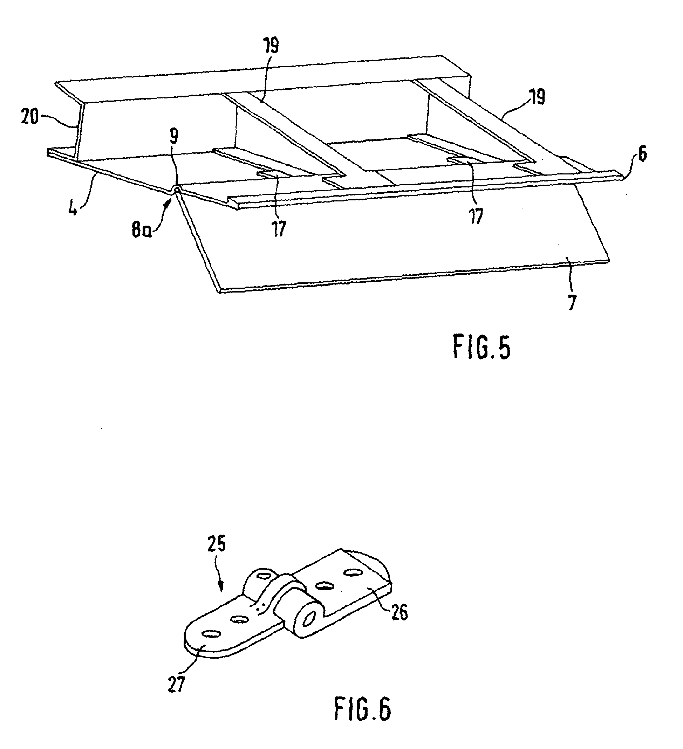

Die Klappe 7 aus Prepreg-Material bildet den ersten Teil der in Fig.3 bzw. Fig. 4 dargestellten gelenkartigen Verbindung 10. Der Schlaufenbereich 12 der Klappe 7 weist zudem eine Vielzahl von ausgefrästen Bereichen auf, so dass eine Vielzahl von einzelnen Schlaufen 12a, 12b etc. zurückbleibt. Hierbei ist es vorteilhaft, dass insbesondere bei einer Ausgestaltung der Klappe in Prepreg Technik das Ausfräsen exakt und folglich mit sehr engen Toleranzen möglich ist. Durch die ausgefrästen Bereiche entsteht Raum zum Anbringen eines entsprechenden Gegenstückes, um die Klappe an der druckseitigen Deckhaut zu befestigen. Das Gegenstück bzw. der zweite Teil der gelenkartigen Verbindung 10 ist in Fig. 3 mit Bezugszeichen 15 bezeichnet. Das Gegenstück ist auf analoge Weise wie der klappenförmige Teil der Gelenkverbindung 10 in einstückiger Ausgestaltung herstellbar und weist einzelne Befestigungsschlaufen 16a, 16b etc. auf. Bei eingeführtem Drehstab 14 sind die Schlaufen derart voneinander beabstandet, dass sich Klappenschlaufen 12a, 12b etc. und Befestigungsschlaufen 16a, 16b etc. abwechseln. Dabei sind die Befestigungsschlaufen 16a, 16b etc. jeweils in den ausgefästen Bereichen der Klappe 7 angeordnet, wie sowohl in Fig. 4 als auch in Fig. 5 zu sehen ist. Um die Schwenkbarkeit der Klappe zu gewährleisten ist jedoch, im Gegensatz zu den Klappenschlaufen 12a, 12b etc., der Drehstab 14 drehfest in den Befestigungsschlaufen 16a, 16b etc. angeordnet. Selbstverständlich können auch die Klappenschlaufen 12a, 12b etc. drehfest mit dem Drehstab 14 verbunden sein und die Befestigungsschlaufen 16a, 16b etc. unter Verwendung eines Gleitwerkstoffes um die Drehachse 14 drehbar gelagert sein.

Gemäß einer alternativen Ausführungsform ist das Gegenstück 15 abschnittsweise ausgebildet, wie in Fig. 4 gezeigt ist. Dabei sind die einzelnen Abschnitte - im Folgenden auch Befestigungselemente genannt - analog mit Bezugsziffern 15a, 15b und 15c bezeichnet. Dies hat den Vorteil einer Gewichsteinsparung, ohne dabei auf eine ausreichende Steifigkeit bzw. Festigkeit der Struktur verzichten zu müssen. Andererseits kann das Gegenstück bei dieser Ausführungsform sowohl aus Faserverbundwerkstoff als auch aus metallischem Werkstoff bestehen, da aufgrund der abschnittsweisen Ausgestaltung die Abmessung in Spannweitenrichtung jedes einzelnen mittels Umklappen hergestellten Befestigungselementes relativ gering sind. Dies bedeutet, dass bei dem zur Herstellung des Gegenstückes erforderlichen Umklappvorganges die Gefahr bzw. das Auftreten von Spannungen und Rissen vermindert ist. Im Gegensatz dazu ist bei der Herstellung der Klappe 7 aufgrund deren Erstreckung in Spannweitenrichtung von bis zu 17 m eine derartige Faltung entlang der Symmetrieebene mit herkömmlichen Blechen kaum zu erreichen ist, so dass mit den üblichen metallischen Materialien die erforderliche Spaltdichtigkeit nicht zu erzielen ist.

Zur Anbringung der gelenkartigen Verbindung 10 an der druckseitigen Deckhaut 4 sind, wie aus Fig. 5 zu sehen ist, Aussparungen 17 in der druckseitigen Deckhaut 4 vorgesehen.

Diese ausgefrästen Aussparungen 17 verlaufen in Spannweitenrichtung entlang der Einwölbung 9. Die Abmessungen der Aussparungen 17 sind dabei an die entsprechenden Befestigungsbereiche 18 der Befestigungselemente 15a, 15b, 15c angepasst. In diese Aussparungen 17 sind die Befestigungsbereiche 18 eingeführt und mit der druckseitigen Deckhaut 4 verklebt und/ oder vernietet.

Gemäß einer zweiten Ausführungsform ist die Klappe mit integrierter Gelenkverbindung 10 mittels konventioneller Textiltechnik herstellbar. Die Klappe 7 besteht bei dieser Ausführungsform aus zwei unterschiedlichen Multiaxialgelegen, nämlich einem unidirektionalen sowie einem multidirektional verstärktem Gelege, vorzugsweise einem CFK-Gelege. Die Lagen sind entsprechend der Dicke der Klappe übereinandergelegt und vernäht, wobei das unidirektionale Gelege im Schlaufenbereich 12 angeordnet ist. Dies bewirkt eine dreidimensionale Verstärkung der Klappe 7 im Schlaufenbereich 12. Ferner wird durch eine derartige Anordnung eine Delamination der Klappe 7 in der Symmetrieebene ausgehend vom Schlaufenbereich 12 vermieden. Wie bei der zuvor diskutierten Prepreg-Variante befindet sich im Schlaufenbereich 12 ein Gleitwerkstoff 13, beispielsweise ein PTFE-Liner. Der Innendurchmesser des Schlaufenbereiches 12 ist auch hier durch den Durchmesser eines Formstabes vorgegeben, der nach der Harzinjektion entnommen wird. Der Gleitwerkstoff 13 verbleibt wiederum zur Reduzierung von Reibungskräften im Schlaufenbereich 12. Nach dem Aushärten werden auch bei dieser Ausführungsform Schlaufen 12a, 12b, 12c mit hoher Genauigkeit ausgefräst und analog zu der zuvor diskutierten Ausführungsform mit einem Gegenstück 15 bzw. Befestigungselementen 15a, 15b, 15c entlang eines Drehstabes 14 angeordnet. Dabei kann das Gegenstück 15 bzw. jedes einzelne Befestigungselement 15a, 15b, 15c aus Blech, Prepreg-Material oder Textilgelege bestehen. Die Textiltechnik-Variante hat jedoch den Vorteil der kostengünstigeren Herstellung. Ferner weist sie ein geringes Gewicht auf und zeichnet sich gegenüber der Prepreg-Variante durch eine Verstärkung im Schlaufenbereich 12 in Dickenrichtung auf.

Der Vollständigkeit halber sei erwähnt, dass gemäß einer weiteren Ausführungsform auch herkömmliche, für die Luftfahrt nach DZ-0396-3 qualifizierte Gelenklager für die Klappenanlenkung prinzipiell geeignet sind, jedoch nicht den zuvor beschriebenen Ausgestaltungen aus Faserverbunswerkstoff vorzuziehen sind, da eine nicht so hohe Spaltdichtigkeit erzielt werden kann. Ein deratiges Gelenklager 25 ist in Fig. 6 dargestellt. Das Gelenklager weist zwei Scharnierteile 26, 27 auf. Das eine Scharnierteil 26 ist z.B. mittels Nieten (nicht dargestellt) auf eine Klappe aus Faserverbundwerkstoff montiert. Das andere Scharnierteil ist z.B. an der druckseitigen Deckhaut 4 befestigt. Gegenüber den Ausgestaltungen aus Faserverbundwerkstoff ist jedoch die Bauhöhe des Gelenklagers größer als die in die Klappe 7 integrierte Gelenkverbindung 10. Der Durchmesser des herkömmlichen Gelenklagers ist typischerweise größer 12 mm.

Gemäß einer weiteren bevorzugten Ausführungsform ist die in Fig. 2 dargestellte Hinterkantenstruktur in monolithischer Bauweise ausgeführt, was in Fig. 5 verdeutlicht ist. Zur Verdeutlichung des Aufbaus ist in Fig. 5 jedoch nicht die saugseitige Deckhaut dargestellt. Wie aus Fig. 2 bzw. 5 zu sehen ist, ist die druckseitige Deckhaut 4 von der saugseitigen Deckhaut 5 über in Strömungsrichtung verlaufende rippenförmige Verbindungselemente 19 beabstandet. Ferner ist zwischen druckseitiger 4 und saugseitiger Deckhaut 5 ein Anschlussprofil 20 vorgesehen, über das die gesamte Hinterkantenstruktur auf einfache Weise austauschbar ist. Das Anschlussprofil 20 ist zu diesem Zweck über lösbare Nieten an einen Abschlussholm (nicht dargestellt) eines Flügels, einer Landeklappe oder dergleichen ab- und anmontierbar. Dies hat den Vorteil, dass die Hinterkantenstruktur samt Klappe als Einheit schnell durch ein entsprechendes Austauschteil ersetzbar ist, so dass im Falle einer Beschädigung der Klappe die gesamte Hinterkantenstruktur ausgewechselt wird. Auf diese Weise ist eine einfache, effektive und damit kostengünstige Wartung möglich. Um den Wartungsaufwand ferner zu reduzieren ist der den Stellhebel 21 betätigende Aktuator (nicht dargestellt) vorzugsweise außerhalb der Hinterkantenstruktur, d.h. innerhalb des vorderen Profilbereiches 2, angeordnet.

Abschließend sei angemerkt, dass die druckseitige Deckhaut 4, die saugseitige Deckhaut 5, die Rippen 19 sowie das Anschlussprofil 20 aus Blitzschutzgründen vorzugsweise in Aluminiumbauweise gefertigt sind. Um den Blitzschutz weiter zu verbessern, kann in den Faserverbundwerkstoff zusätzlich ein Kupferdrahtgeflecht (engl. "copper mesh") sowie ein Masseband einlaminiert sein.

## Patentansprüche

1. Aerodynamisches Profil mit verstellbarer Klappe, das einen vorderen Profilbereich (2) sowie einen in der Abströmung liegenden hinteren Profilbereich (3) aufweist und durch eine druckseitige sowie eine saugseitige Deckhaut (4, 5) begrenzt ist, wobei die druckseitige und die saugseitige Deckhaut (4, 5) im hinteren Profilbereich (3) in einer Profilhinterkante (6) zusammenlaufen, und im hinteren Profilbereich (3) an der Unterseite der druckseitigen Deckhaut (4) eine Klappe (7) derart schwenkbar gelagert ist, dass die Klappe (7) im Ruhezustand in Strömungsrichtung (S_{ström}) weisend an der Kontur der druckseitigen Deckhaut (4) anliegt und im ausgelenkten Zustand einen Winkel mit der druckseitigen Deckhaut (4) einschließt, **dadurch gekennzeichnet, dass** zur luftdichten Anlenkung der Klappe (7) in der Klappe (7) eine luftdichte Gelenkverbindung (10) in Form eines Schlaufenbereiches (12), welcher durch Falten des Klappenmaterials gebildet ist, integriert ist, und dass im Windschatten der ausgelenkten Klappe (7) sich ein die Strömungsverhältnisse verbesserndes Wirbelsystem ausbildet.

2. Aerodynamisches Profil nach Anspruch 1 **dadurch gekennzeichnet, dass** die druckseitige Deckhaut (4) im Übergangsbereich (8a) zur Klappe (7) eine Einwölbung (9) aufweist, die an die Form der Gelenkverbindung (10) und der Klappe (7) angepasst ist.

3. Aerodynamisches Profil nach Anspruch 1, **dadurch gekennzeichnet, dass** die Klappe (7) aus Faserverbundwerkstoff besteht.

4. Aerodynamisches Profil nach einem der Ansprüche 1 bis 3, **dadurch gekennzeichnet, dass** die Klappe (7) aus einem laminierten, zusammengefalteten Prepreg-Material besteht, wobei entlang der Faltung ein luftdichter Schlaufenbereich (12) ausgebildet ist, in den zur drehbaren Lagerung der Klappe (7) ein Gleitwerkstoff (13) eingebracht und ein Drehstab (14) einführbar ist.

5. Aerodynamisches Profil nach einem der Ansprüche 1 bis 3, **dadurch gekennzeichnet, dass** die Klappe (7) aus unidirektional und multidirektional verstärkten Faserverbund-Gelegen besteht, die derart miteinander vernäht, imprägniert und ausgehärtet sind, dass im Bereich des unidirektionalen Faserverbund-Geleges ein verstärkter luftdichter Schlaufenbereich (12) entsteht, in den zur drehbaren Lagerung der Klappe (7) ein Gleitwerkstoff (13) eingebracht und ein Drehstab (14) einführbar ist.

6. Aerodynamisches Profil nach Anspruch 4 oder 5, **dadurch gekennzeichnet, dass** der Schlaufenbereich (12) ausgefräste Bereiche aufweist, so dass die Klappe (7) eine Vielzahl von einzelnen Schlaufen (12a, 12b, 12c) aufweist, in die der Drehstab (14) einführbar ist.

7. Aerodynamisches Profil nach einem der Ansprüche 4 bis 6, **dadurch gekennzeichnet, dass** an dem Drehstab (14) femer ein Gegenstück (15; 15a, 15b, 15c) angeordnet ist, das aus Faserverbundwerkstoff, Aluminium oder einem anderen blechförmigen, metallischen Material besteht und Befestigungsschlaufen (16a, 16b, 16c) aufweist, und wobei der Drehstab (14) mit den Befestigungsschlaufen (16a, 16b, 16c) drehfest verbunden ist und mit den Schlaufen (12a, 12b, 12c) der Klappe (7) drehbar gelagert ist, oder umgekehrt.

8. Aerodynamisches Profil nach Anspruch 1, **dadurch gekennzeichnet, dass** in der druckseitigen Deckhaut (4) Aussparungen (17) vorgesehen sind.

9. Aerodynamisches Profil nach Anspruch 8, **dadurch gekennzeichnet, dass** Befestigungsbereiche (18) der Befestigungselemente (15a, 15b, 15c) in die Aussparungen (17) eingeführt und mittels Kleben und/oder Nieten an der druckseitigen Deckhaut (4) angebracht sind.

10. Aerodynamisches Profil nach Anspruch 1, **dadurch gekennzeichnet, dass** zwischen druckseitiger und saugseitiger Deckhaut (4, 5) Verbindungselemente (19) angeordnet sind, wobei die Verbindungselemente (19) rippenförmig ausgebildet und in Strömungsrichtung (S_{ström}) verlaufend oder holmförmig in Spannweitenrichtung angeordnet sind.

11. Aerodynamisches Profil nach Anspruch 1, **dadurch gekennzeichnet, dass** zwischen druckseitiger und saugseitiger Deckhaut (4, 5) ein Anschlußprofil (20) angeordnet ist, über das der hintere Profilbereich (3) an dem vorderen Profilbereich (2) mittels Befestigungsmitteln austauschbar anbringbar ist.

12. Aerodynamisches Profil nach einem der vorangegangenen Ansprüche, **dadurch gekennzeichnet, dass** an der Unterseite der Klappe (7) ein Befestigungsteil (23) vorgesehen ist, an dem ein Stellhebels (21) über eine Gelenkstelle (22) angelenkt ist.

13. Aerodynamisches Profil nach einem der vorangegangenen Ansprüche, **dadurch gekennzeichnet, dass** ein Aktuator vorgesehen ist, der die Klappe (7) über den daran angelenkten Stellhebel (21) betätigt, wobei der Aktuator im vorderen Profilbereich (2) angeordnet ist.

14. Aerodynamisches Profil nach einem der vorangegangenen Ansprüche, **dadurch gekennzeichnet, dass** die druckseitige Deckhaut (4), die saugseitige Deckhaut (5), die Verbindungselemente (19) sowie das Anschlussprofil (20) aus Aluminium bestehen.

## Claims

1. An airfoil with adjustable flap that has a front airfoil area (2) as well as a rear airfoil area (3) lying in the flow-off and is delimited by a cover skin (4, 5) on the pressure side and on the suction side, the cover skin (4, 5) on the pressure side and on the suction side converging in the rear airfoil area (3) in an airfoil rear edge (6), and a flap (7) being supported in the rear airfoil area (3) on the underside of the cover skin (4) on the pressure side pivotably in such a way that the flap (7) lies in the non-operative state pointing in the direction of flow (S_{ström}) close to the contour of the cover skin (4) on the pressure side and in the deflected state encloses an angle with the cover skin (4) on the pressure side, **characterized in that** for airtight coupling of the flap (7) an airtight hinge joint (10) in the form of a loop area (12), which is formed by folding the flap material, is integrated in the flap (7), and that in the lee of the deflected flap (7) a vortex system improving the flow conditions is formed.

2. An airfoil according to claim 1, **characterized in that** the cover skin (4) on the pressure side has an arching (9) in the area of transition (8a) to the flap (7), which arching is matched to the shape of the hinge joint (10) and the flap (7).

3. An airfoil according to claim 1, **characterized in that** the flap (7) consists of fibre-composite material.

4. An airfoil according to one of claims 1 to 3, **characterized in that** the flap (7) consists of a laminated prepreg material folded together, an airtight loop area (12) being formed along the folding, into which area a sliding material (13) is introduced and a rotary bar (14) is insertable for the rotatable support of the flap (7).

5. An airfoil according to one of claims 1 to 3, **characterized in that** the flap (7) comprises unidirectionally and multidirectionally reinforced fibre-composite fabrics, which are sewn to one another, impregnated and cured in such a way that in the area of the unidirectional fibre-composite fabric a reinforced airtight loop area (12) arises, into which a sliding material (13) is introduced and a rotary bar (14) is insertable for the rotatable support of the flap (7).

6. An airfoil according to claim 4 or 5, **characterized in that** the loop area (12) has milled-out areas, so that the flap (7) has a plurality of individual loops (12a, 12b, 12c), into which the rotary bar (14) is insertable.

7. An airfoil according to one of claims 4 to 6, **characterized in that** further arranged on the rotary bar (14) is a counterpiece (15; 15a, 15b, 15c), which comprises fibre-composite material, aluminium or another metal material in the form of a sheet and has attachment loops (16a, 16b, 16c), the rotary bar (14) being connected to the attachment loops (16a, 16b, 16c) so that it cannot rotate and being supported rotatably by the loops (12a, 12b, 12c) of the flap (7) or vice-versa.

8. An airfoil according to claim 1, **characterized in that** cut-outs (17) are provided in the cover skin (4) on the pressure side.

9. An airfoil according to claim 8, **characterized in that** attachment areas (18) of the attachment elements (15a, 15b, 15c) are introduced into the cut-outs (17) and fitted by means of gluing and/or riveting on the cover skin (4) on the pressure side.

10. An airfoil according to claim 1, **characterized in that** arranged between the cover skin (4, 5) on the pressure side and on the suction side are connecting elements (19), the connecting elements (19) being formed rib-shaped and running in the flow direction (S_{ström}), or spar-shaped in the wingspan direction.

11. An airfoil according to claim 1, **characterized in that** arranged between the cover skin (4, 5) on the pressure side and on the suction side is a connecting section (20), via which the rear airfoil region (3) can be fitted exchangeably on the front airfoil region (2) by means of attachment means.

12. An airfoil according to one of the preceding claims, **characterized in that** an attachment part (23) is provided on the underside of the flap (7), to which an operating lever (21) is linked via a hinge point (22).

13. An airfoil according to one of the preceding claims, **characterized in that** an actuator is provided, which operates the flap (7) via the operating lever (21) linked thereto, the actuator being arranged in the front airfoil area (2).

14. An airfoil according to one of the preceding claims, **characterized in that** the cover skin (4) on the pressure side, the cover skin (5) on the suction side, the connecting elements (19) and the connecting section (20) consist of aluminium.

## Revendications

1. Profil aérodynamique avec un volet réglable, présentant une zone profilée avant (2) ainsi qu'une zone profilée arrière (3) située en aval et délimité par une peau de protection (4, 5) côté pression et une peau côté aspiration, la peau de protection côté pression et celle côté aspiration (4, 5) convergeant dans la zone profilée arrière (3) dans une arête arrière (6) du profil, alors qu'un volet (7) est monté de manière pivotante dans la zone profilée arrière (3) sur la face inférieure de la peau de protection côté pression (4) de telle sorte que ce volet (7) se trouve dans un état au repos orienté dans la direction d'écoulement (S_{ström}) sur le contour de la peau de protection côté pression (4) et, dans l'état déployé, forme un angle avec la peau de protection côté pression (4),
**caractérisé en ce qu'**
une liaison articulée étanche à l'air (10), ayant la forme d'une zone en boucles (12) formée par pliage du matériau du volet, est intégrée dans le volet (7) pour l'articulation du volet (7) de manière étanche à l'air, et
un système tourbillonnaire améliorant les rapports d'écoulement se crée dans le côté abrité du vent du volet déployé (7).

2. Profil aérodynamique selon la revendication 1,
**caractérisé en ce que**
la peau de protection côté pression (4) présente, dans la zone de transition (8a) par rapport au volet (7), une convexité (9) adaptée à la forme de la liaison articulée (10) et du volet (7).

3. Profil aérodynamique selon la revendication 1,
**caractérisé en ce que**
le volet (7) est composé d'un matériau composite en fibres.

4. Profil aérodynamique selon l'une des revendications 1 à 3,
**caractérisé en ce que**
le volet (7) est composé d'un matériau préimprégné laminé et replié, une zone en boucles étanche à l'air (12) étant formée le long du pli, et un matériau de glissement (13) est appliqué sur celle-ci pour suspendre le volet (7) en rotation avec une tige rotative (14) qui y est introduite.

5. Profil aérodynamique selon l'une des revendications 1 à 3,
**caractérisé en ce que**
le volet (7) est composé de couches composites en fibres renforcées unidirectionnelles et multidirectionnelles, qui sont cousues, imprégnées et durcies ensemble de manière à obtenir dans la zone de la couche composite en fibres unidirectionnelles une zone en boucles (12) renforcée étanche à l'air et dans laquelle un matériau de glissement (13) est appliqué pour suspendre le volet (7) en rotation et une tige rotative (14) peut être introduite.

6. Profil aérodynamique selon la revendication 4 ou 5,
**caractérisé en ce que**
la zone en boucles (12) présente des zones fraisées de sorte que le volet (7) présente une multitude de boucles individuelles (12a, 12b, 12c) dans lesquelles peut être introduite la tige rotative (14).

7. Profil aérodynamique selon l'une des revendications 4 à 6,
**caractérisé en ce que**
la tige rotative (14) comporte en outre une pièce homologue (15; 15a, 15b, 15c), composée d'un matériau composite en fibres, en aluminium ou dans un autre matériau métallique en tôle et présentant des boucles de fixation (16a, 16b, 16c), est solidaire en rotation avec ces boucles de fixation (16a, 16b, 16c) et est suspendue en rotation dans les boucles (12a, 12b, 12c) du volet (7), ou inversement.

8. Profil aérodynamique selon la revendication 1,
**caractérisé en ce que**
des évidements (17) sont prévus dans la peau de protection côté pression (4).

9. Profil aérodynamique selon la revendication 8,
**caractérisé en ce que**
des zones de fixation (18) des éléments de fixation (15a, 15b, 15c) sont introduites dans les évidements (17) et appliquées au moyen d'un collage ou/ou d'un rivetage sur la peau de protection côté pression (4).

10. Profil aérodynamique selon la revendication 1,
**caractérisé en ce que**
des éléments de liaison (19) disposés entre la peau de protection côté pression et celle côté aspiration (4, 5), ont la forme de nervures et s'étendent dans la direction d'écoulement (S_{ström}) ou bien sont disposés sous la forme d'une barre dans le sens de la longueur.

11. Profil aérodynamique selon la revendication 1,
**caractérisé en ce qu'**
un profil de raccordement (20) disposé entre la peau de protection côté pression et celle côté aspiration (4, 5) permet d'appliquer, à des fins de remplacement, la zone profilée arrière (3) sur la zone profilée avant à l'aide de moyens de fixation.

12. Profil aérodynamique selon l'une des revendications précédentes,
**caractérisé en ce qu'**
une pièce de fixation (23) est prévue sur la face inférieure du volet (7) et permet l'articulation d'un levier de manoeuvre (21) sur un point d'articulation (22).

13. Profil aérodynamique selon l'une des revendications précédentes,
**caractérisé en ce qu'**
un actionneur prévu pour actionner le volet (7) via le levier de manoeuvre (21) articulé sur celui-ci, est disposé dans la zone profilée avant (2).

14. Profil aérodynamique selon l'une des revendications précédentes,
**caractérisé en ce que**
la peau de protection côté pression (4), la peau de protection côté aspiration (5), les éléments de liaison (19) ainsi que le profil de raccordement (20) sont en aluminium.
